Europäisches Patentamt

European Patent Office

Office européen des brevets

(11) Numéro de publication: **0 278 196**
**A1**

(12) **DEMANDE DE BREVET EUROPEEN**

(21) Numéro de dépôt: **87402955.6**

(51) Int. Cl.4: **G06F 12/08**

(22) Date de dépôt: **22.12.87**

Le titre de l'invention a été modifié (Directives relatives à l'examen pratiqué à l'OEB, A-III, 7.3)

(30) Priorité: **31.12.86 FR 8618422**

(43) Date de publication de la demande:
**17.08.88 Bulletin 88/33**

(84) Etats contractants désignés:
**DE GB IT**

(71) Demandeur: **THOMSON-CSF**
**173, Boulevard Haussmann**
**F-75379 Paris Cédex 08(FR)**

(72) Inventeur: **Cekleov, Michel**
**THOMSON-CSF SCPI 19, avenue de Messine**
**F-75008 Paris(FR)**
Inventeur: **Fleury, Thierry**
**THOMSON-CSF SCPI 19, avenue de Messine**
**F-75008 Paris(FR)**
Inventeur: **Heintz, Christian**
**THOMSON-CSF SCPI 19, avenue de Messine**
**F-75008 Paris(FR)**
Inventeur: **Metsu, Philippe**
**THOMSON-CSF SCPI 19, avenue de Messine**
**F-75008 Paris(FR)**

(74) Mandataire: **Lincot, Georges et al**
**THOMSON-CSF SCPI 19, avenue de Messine**
**F-75008 Paris(FR)**

(54) **Procédé de gestion d'antémémoires dans un système multiprocesseur.**

(57) Le système est constitué par des multiprocesseurs P, à $P_n$ reliés à une mémoire centrale (9) au moyen d'un bus unique (8). Chaque processeur comprend une unité centrale (1) et une antémémoire (2, 4). Le procédé consiste à scinder l'antémémoire en deux niveaux (2, 4), à faire effectuer les écritures émises par l'unité centrale de chaque processeur dans les deux niveaux d'antémémoire grâce à un processus d'écritures immédiates pour maintenir une copie à jour dans le second niveau (4) des informations contenues dans le premier niveau (2) et à effectuer la mise à jour des informations correspondantes dans la mémoire centrale (1) depuis le second niveau d'antémémoire (4) par un processus d'écritures différées.

Application: systèmes de traitement de l'information.

FIG_1

# PROCEDE DE GESTION D'ANTEMEMOIRES ASSOCIEES A DES PROCESSEURS DANS UNE ARCHITECTURE MULTIPROCESSEUR A BUS UNIQUE ET SYSTEME DE TRAITEMENT DE DONNEE FONCTIONNANT SUIVANT CE PROCEDE.

La présente invention concerne un procédé de gestion d'antémémoires associées à des processeurs dans une architecture multiprocesseur à bus unique et un système de traitement de donnée fonctionnant suivant ce procédé.

Elle concerne notamment les systèmes informatiques multiprocesseurs fortement couplés où les processeurs sont reliés à un bus unique et où chaque processeur est doté d'une antémémoire privée.

Une antémémoire ou mémoire cache est une mémoire rapide qui joue le rôle de tampon entre l'unité centrale et la mémoire centrale d'un ordinateur. Chaque fois qu'une référence de l'unité centrale est satisfaite par cette mémoire tampon un transfert d'informations depuis (ou vers) la mémoire centrale est supprimé. L'antémémoire étant généralement beaucoup plus rapide que la mémoire centrale le temps d'accès moyen à une référence mémoire est plus court qu'en l'absence de cette mémoire tampon.

L'efficacité d'une antémémoire réside dans sa faculté à conserver les informations qui ont le plus de probabilité d'être référencées par l'unité centrale. Cette probabilité est communément appelée le taux de succès ; la localité des programmes et les différentes caractéristiques de l'antémémoire en détermine la valeur.

L'utilisation d'antémémoire est un concept relativement ancien dont l'origine remonte au système IBM 360/85 conçu en 1968. Depuis, la presque totalité des ordinateurs se situant dans la gamme des mini-ordinateurs et des machines de puissance encore connues sous le vocable anglo-saxon "mainframe" sont dotés d'antémémoires.

L'accroissement du débit du flot d'informations entrant et sortant de l'unité centrale n'est pas le seul intérêt d'une antémémoire. Dans les systèmes multiprocesseurs fortement couplés, les processeurs partagent le même espace physique d'adressage c'est-à-dire, la même mémoire centrale, un réseau d'interconnexion relie tous les processeurs et toutes les unités d'entrées/sorties à une mémoire centrale commune. Le réseau d'interconnexion et la mémoire centrale étant des ressources partagées, les conflits qui se produisent lorsque plusieurs unités y accèdent simultanément sont une cause de dégradation des performances. Le fait d'adjoindre une antémémoire locale à chaque processeur réduit notablement le trafic avec la mémoire centrale propre à chaque processeur, et permet d'interconnecter un nombre conséquent de processeurs sur un simple bus, ce qui offre un rapport coût/performances particulièrement avantageux.

Cependant, une telle architecture pose le problème du maintien de la cohérence de l'information qui est stockée dans l'espace physique. Ainsi, si deux processeurs effectuent des écritures sur une même zone d'adressage ces modifications vont s'exécuter physiquement au niveau des copies qui sont présentes dans leur antémémoire respective. Si aucune précaution n'est prise des copies différentes d'une même information peuvent coexister dans le système ; il y a alors incohérence des informations. Ce type de problème peut aussi se produire en raison de la présence d'unités d'entrées/sorties intelligentes de type DMA par exemple, qui peuvent accéder directement à la mémoire centrale, où DMA est l'abréviation du vocable anglo-saxon "Direct Memory Access". Il faut remarquer que dans ce cas le problème d'incohérence des informations peut aussi survenir en environnement monoprocesseur. Enfin une dernière cause pouvant provoquer des incohérences peut être dûe à la migration d'un processus d'un processeur à un autre au cours de son exécution.

Quand les incohérences se produisent elles peuvent provoquer des erreurs au niveau des applications s'exécutant sur le système qui sont très difficiles, voire impossibles, à localiser.

Ce problème est connu depuis de nombreuses années et de nombreuses solutions ont déjà été proposées et certaines ont donné lieu à la réalisation de systèmes. La plupart de ces solutions sont évoquées dans l'article "Cache Memories" d'Alan Jay Smith paru dans la revue Computing Surveys (vol. 14, N° 3, September 1982).

Récemment de nombreux protocoles ont été proposés pour maintenir la cohérence des informations dans un système multiprocesseur fortement couplé sur bus unique. On trouvera une bonne présentation de ces protocoles dans le rapport technique N° 85-10-05 du département informatique de l'université de Washington à Seattle intitulé : "An Evaluation of Cache Coherence Solutions in Shared-Bus Multiprocessors" dont les auteurs sont J. Archibald et J.L. Baer.

L'implantation physique de ces protocoles repose sur une caractéristique essentielle des bus qui est leur capacité de diffusion (broadcast). En effet, le principe de communication d'un bus consiste à multiplexer temporellement des lignes. Toutes les unités d'un système qui sont connectées électriquement à ces lignes peuvent "observer" les informations qui sont échangées.

Quand une unité centrale ne trouve pas les informations dont elle a besoin dans son antémémoire une requête est expédiée sur le bus à destination de la mémoire centrale. Cette demande de chargement d'informations dans une antémémoire peut être examinée par toutes les autres antémémoires ou plus précisément tous les contrôleurs qui y sont associés. Si une antémémoire contient la copie à jour de l'information demandée elle en avertit aussitôt la mémoire centrale qui ne prend pas en compte la requête, et répond au processeur à la place de la mémoire centrale. De plus, quand une unité centrale modifie des informations dans son antémémoire qui sont susceptibles d'être partagées dynamiquement par plusieurs processeurs elle expédie une requête sur le bus pour invalider les autres copies. Une autre possibilité consiste à diffuser la modification dans toutes les antémémoires du système.

Lorsque le maintien de la cohérence des informations est assuré entièrement par le matériel on dit que l'architecture multiprocesseur est transparente. Une application formée de plusieurs processus s'exécute alors de façon identique quel que soit le nombre de processeurs présents. Seule la durée d'exécution varie. La réalisation d'une architecture multiprocesseur transparente est obtenue de la façon suivante. Dans ces systèmes l'antémémoire se comporte logiquement comme une mémoire associative bien que sa réalisation interne puisse utiliser d'autres techniques. Chaque entrée contient un couple "adresse/données" et lors d'un accès par l'unité centrale l'adresse qui est présentée est comparée à celles contenues dans toutes les entrées. Si une des comparaisons s'avère positive la partie "données" ou un sous-ensemble est fourni à l'unité centrale.

La partie "données", qui est désignée couramment sous le nom de bloc, correspond au granule d'information qui est échangé avec la mémoire centrale. Un bloc à généralement une taille de plusieurs mots mémoire, aussi, lors des accès de l'unité centrale, seule une partie du bloc est effectivement lue ou écrite.

L'ensemble formé par toutes les parties "adresse" des entrées de l'antémémoire constitue ce que l'on appelle le répertoire ou encore en anglo-saxon le "Directory". Il précise l'adresse de toutes les informations qui sont stockées dans l'antémoire, ces adresses peuvent être des adresses virtuelles bien que dans le cas général ce soient des adresses réelles.

Pour pouvoir, lors d'un transfert avec la mémoire centrale, vérifier si une ou plusieurs antémémoires sont concernées il faut les accéder avec l'adresse qui a été positionnée sur le bus. Aussi, chaque transfert sur le bus implique que toutes les antémémoires soient accédées pour vérifier si les copies de l'information demandée sont présentes. Il est évident que le flot de références à l'antémémoire en provenance de l'interface au bus interfère avec le flot normal des références à l'antémémoire en provenance de l'unité centrale. Généralement l'antémémoire n'est pas suffisamment rapide pour pouvoir supporter ce double flot de références sans ralentir l'unité centrale et/ou l'interface au bus. Une manière simple de résoudre ce problème consiste à implanter au niveau de l'interface au bus une copie du répertoire de l'antémémoire. Ce deuxième répertoire est accédé lors de chaque transfert sur le bus pour détecter la présence de copies éventuelles dans l'antémémoire correspondante. Tous les accès inutiles à l'antémémoire sont alors filtrés par ce répertoire. Cependant, quand une incohérence potentielle est détectée l'interface au bus accède à l'antémémoire pour invalider, mettre à jour ou lire une entrée.

Dans de tels systèmes multiprocesseurs il est possible de connecter un nombre très important de processeurs sur un même bus si le taux de succès des antémémoires est très élevé (en faisant abstraction des problèmes de charges électriques). Dans le cas purement théorique d'antémémoires de taille infinie, le taux de succès atteint 100 % et il est alors possible d'interconnecter un nombre infini de processeurs sur le même bus. Dans la réalité le taux de succès est compris entre 90 % et 97 % ce qui signifie que le débit d'informations entre un processeur et la mémoire centrale n'est jamais nul.

En dehors du taux de succès qui est un facteur du premier ordre sur le débit des références d'un processeur vers la mémoire centrale, une caractéristique primordiale d'une antémémoire, qui influe directement sur ce débit, est définie par le processus de mise à jour de la mémoire centrale utilisé. Lorsqu'un bloc est modifié dans une antémémoire, la mémoire centrale doit être mise à jour. Cette mise à jour, qui se traduit par l'envoi d'une requête d'écriture sur le bus, peut avoir lieu immédiatement. Dans ce cas la mise à jour de la mémoire centrale s'effectue par écritures immédiates, "write-through" dans le language anglo-saxon. Toutes les écritures effectuées par l'unité centrale provoquent alors un accès au bus et à la mémoire centrale.

Généralement, le taux d'écriture d'une unité centrale correspond à environ 15 % à 20 % des requêtes mémoires qu'elle émet. On peut donc considérer qu'une antémémoire à écritures immédiates ne permet d'optimiser que les lectures. En fait ceci n'est pas rigoureusement vrai car une unité centrale n'est jamais bloquée sur une écriture. Si les écritures sont tamponnées au niveau de l'inter face au bus, l'unité centrale n'est pas ralentie. Par contre, en environnement multiprocesseur, ce processus de mise à jour de la mémoire centrale est coûteux au niveau des performances globales puisque, outre le traitement des défauts, toutes les écritures provoquent un accès sur le bus. Contrairement à ce qui a été affirmé précédemment, la puissance de calcul d'un tel système multiprocesseur ne peut théoriquement pas être infinie puisque le bus va être saturé par les requêtes d'écriture.

Un autre processus de mise à jour consiste à recopier en mémoire centrale lors de leur déchargement les blocs qui ont été modifiés. En régime permanent l'antémémoire est entièrement utilisée. Lorsqu'un défaut survient le bloc manquant est chargé dans l'entrée qui est désignée par un algorithme de remplacement. Si l'entrée pointée par l'algorithme de remplacement contient de l'information qui a été modifiée, celle-ci est recopiée en mémoire centrale avant d'être écrasée dans l'antémémoire par le chargement de la nouvelle information. La mise à jour de la mémoire centrale s'effectue dans ce cas par écritures différées encore désigné par le terme "write-back" dans le language anglo-saxon. On peut alors exploiter le terme le phénomène de localité sur les écritures puisque plusieurs modifications du même bloc ne provoqueront qu'un seul accès au bus et à la mémoire centrale. Toutefois le traitement d'un défaut sera plus long comparativement au processus de mise à jour par écritures immédiates puisqu'il faut exécuter un ou plusieurs accès supplémentaires pour recopier le bloc courant si celui-ci a été modifié. Généralement la proportion des blocs qui ont été modifiés depuis leur chargement dans une antémémoire à écritures différées se situe entre 35 et 50 %.

Il est clair que l'utilisation d'un processus de mise à jour de la mémoire centrale par écritures différées permet d'obtenir en environnement multiprocesseur des performances globales nettement supérieures à celles qui sont possibles avec des antémémoires à écritures immédiates. On sait en effet, que la bande passante du bus qui est utilisée par un processeur est alors directement proportionnelle au taux de défaut de son antémémoire (le taux de défaut étant le complément à 1 du taux de succès). Si le taux de succès atteint 100 % on peut atteindre une performance globale théorique infinie.

Il est clair aussi que la réalisation d'un système multiprocesseur sur bus unique performant implique la présence d'antémémoires locales à chaque processeur dont le processus de mise à jour de la mémoire centrale s'effectue par écritures différées.

Cependant l'évolution récente des architectures des microprocesseurs ne permet pas des réalisations multiprocesseurs optimales. Actuellement, on assiste à l'apparition d'une nouvelle génération de microprocesseurs 32 bits. Ceux-ci ne sont plus des composants électroniques à usage général mais de véritables unités centrales de mini-ordinateurs. En raison de leurs performances intrinsèques très élevées ils doivent obligatoirement fonctionner avec une antémémoire. Ces nouveaux produits sont destinés à un marché informatique où une puissance de calcul importante est requise, comme les stations de travail pour les applications d'ingénierie.

L'ensemble des applications pour lesquelles ces composants sont destinés implique qu'ils aient une architecture moins "ouverte" que les microprocesseurs 8 et 16 bits des générations précédentes. En réalité ils ne peuvent fonctionner qu'avec une antémémoire dont l'organisation et les principales caractéristiques sont figées. Des réalisations de ces nouveaux microprocesseurs sont connues sous les références : Clipper, R2000 et MC68030. Celles-ci sont commercialisées respectivement par les sociétés Fairchild, MIPS, et Motorola.

Dans le cas des microprocesseurs R2000 et MC68030 la mise à jour du niveau supérieur de la hiérarchie mémoire, qui est généralement la mémoire centrale, s'effectue par écritures immédiates. L'architecture logique du Clipper permet de définir le processus de mise à jour au niveau de chaque page. La page étant le granule d'échange entre la mémoire centrale et les disques. Dans les systèmes à mémoire virtuelle la page a la taille des blocs d'informations gérés par le système d'exploitation pour associer des adresses virtuelles à des adresses réelles. Cependant, les données qui sont partagées et qui sont susceptibles d'être modifiées doivent être gérées avec un processus de mise à jour par écritures immédiates.

Deux circuits d'antémémoire et de traduction d'adresses virtuelles en adresses réelles connus sous l'abréviation anglo-saxonne "CAMMU : Cache and Memory Management Unit" sont associés à l'unité centrale du Clipper. Ces deux circuits sont capables d'observer les requêtes d'écriture en provenance des autres processeurs et des unités d'entrées/sorties ainsi que les requêtes de lecture en provenance de ces mêmes unités d'entrées/sorties. Il est donc possible de bâtir une architecture multiprocesseur autour du bus contrôlé par le circuit unité centrale et les deux circuits CAMMU formant le Clipper. Cependant, la taille limitée des antémémoires (4 K-octets d'antémémoire d'instructions et 4 K-octets d'antémémoire de données) ne permet pas d'assurer un taux de succès suffisant pour pouvoir interconnecter un nombre important de processeurs. De plus, il convient de noter que cette architecture multiprocesseur n'est pas réellement transparente puisque le logiciel doit marquer les pages contenant des données partagées en écriture.

D'autre part cette nouvelle génération de microprocesseurs 32 bits ne permet pas de satisfaire directement les deux caractéristiques d'un processeur qui permettent de réaliser une architecture multiprocesseur sur bus unique performante qui sont :

-une taille d'antémémoire importante qui permet de garantir un bon taux de succès moyen ;

-un processus de mise à jour de la mémoire centrale par écritures différées qui minimise le trafic sur le bus reliant les processeurs à la mémoire centrale commune.

En effet, même si la taille de l'antémémoire n'est pas figée du fait qu'elle est directement intégrée sur le même circuit que l'unité centrale ou sur des circuits annexes, il est difficile d'implanter une antémémoire de taille importante dont le temps d'accès soit suf fisamment court pour ne pas ralentir l'unité centrale. Quand l'antémémoire n'est pas réalisée à partir d'un ou plusieurs circuits spécifiques elle est implantée à partir de circuits de mémoire rapide standards. Le temps d'accès augmente alors en fonction de la taille du plan mémoire parce que le coût (en temps) des communications entre circuits devient important par rapport à leur vitesse intrinsèque. Ce problème devient de plus en plus primordial car, les technologies de circuits évoluent beaucoup plus vite que les technologies de conditionnement des systèmes électroniques. Il va se poser pour l'utilisation des futures versions des microprocesseurs 32 bits du type R2000 par exemple dont le "pipeline" d'exécution des instructions implique que l'antémémoire soit accédée en un seul temps de cycle de l'unité centrale.

Le but de l'invention est de pallier les inconvénients précités.

A cet effet, l'invention a pour objet, un procédé de gestion d'antémémoire associée à des processeurs dans une architecture multiprocesseur à bus unique reliant chaque processeur à une mémoire centrale commune, chaque processeur comprenant une unité centrale de traitement de l'information et une antémémoire caractérisé en ce qu'il consiste à scinder l'antémémoire en deux niveaux, à faire effectuer les écritures émises par l'unité centrale dans les deux niveaux d'antémémoire grâce à un processus d'écritures immédiates associé au premier niveau pour maintenir une copie à jour dans le second niveau des informations contenues dans le premier niveau et à effectuer la mise à jour des informations correspondantes dans la mémoire centrale depuis le second niveau d'antémémoire par un processus d'écritures différées.

L'invention a pour principal avantage qu'elle permet de ne pas dégrader les performances intrinsèques des nouvelles unités centrales, définies précédemment, en environnement multiprocesseur. Concrètement elle permet d'implanter à proximité immédiate de l'unité centrale, voire sur le même circuit intégré, une antémémoire de taille restreinte. Le deuxième niveau d'antémémoire qui correspond de fait à un niveau supérieur de la hiérarchie mémoire est réalisée à partir de circuits mémoires classiques moins coûteux.

L'architecture d'antémémoire à deux niveaux ainsi réalisée représente un compromis coût/performances idéal pour réaliser une architecture multiprocesseur sur bus unique performante.

En effet, cette organisation permet d'atteindre les principaux objectifs auxquels doit satisfaire une antémémoire, à savoir un temps d'accès minimal et un taux de succès maximal. Le premier niveau qui a une taille plus faible que le second niveau peut être réalisé avec des circuits (spécifiques ou non) utilisant une technologie très performante sans que le coût global soit prohibitif. De plus la capacité réduite du premier niveau d'antémémoire permet d'exploiter la vitesse offerte par la technologie sans que le surcoût en temps dû aux communications avec l'unité centrale ne soit trop sensible.

Un défaut lors de l'accès au premier niveau est résolu en accédant au deuxième niveau qui contient des informations constituant un sur-ensemble de celles qui sont contenues dans le premier niveau. Le deuxième niveau d'antémémoire qui a une capacité plus importante peut donc être réalisé avec des circuits utilisant une technologie moins performante et donc nettement moins coûteuse. Cette découpe en deux niveaux permet donc de garantir un temps d'accès moyen vu de l'unité centrale qui est compatible avec ses performances intrinsèques. Les contraintes de vitesse sont beaucoup moins strictes pour le second niveau car il n'est accédé qu'au moment d'un défaut dans le premier niveau ainsi que pour toutes les écritures effectuées par l'unité centrale. Comme l'unité centrale n'est pas bloquée sur une écriture celles-ci peuvent être tamponnées et s'exécuter de manière asynchrone avec le premier niveau. Il est donc très facile d'implanter une antémémoire au second niveau de taille conséquente (64 K-octets ou plus).

Le taux de succès au niveau d'un processeur, c'est-à-dire le taux de succès de l'ensemble des deux niveaux d'antémémoire sera très élevé sans que cela nuise au temps d'accès moyen vu par l'unité centrale. Le trafic sur le bus sera donc minimisé.

Si le premier niveau utilise un processus de mise à jour par écritures immédiates en raison de contraintes incontournables qui sont imposées par l'architecture de l'unité centrale (du microprocesseur) il est tout à fait possible de gérer le second niveau par écritures différées. Le second niveau d'antémémoire contient toujours une copie à jour des informations qui sont stockées dans un processeur car toutes les écritures effectuées par l'unité centrale le sont dans les deux niveaux. Il est donc possible de maintenir la cohérence des informations suivant le principe qui a été décrit précédemment. Quand une requête de lecture ou d'écriture est émise par un autre processeur ou une unité d'entrées/sorties l'interface au bus peut vérifier la présence d'une copie de l'information demandée en accédant uniquement au second niveau. De cette manière les interférences avec le flot des références mémoire de l'unité centrale qui concerne en priorité le premier niveau d'antémémoire sont minimum. Par contre lorsque le protocole de maintien de la cohérence des informations provoque l'invalidation ou la mise à jour d'un bloc du deuxième niveau celle-ci doit aussi être effectuée au premier niveau.

D'autre part, il est possible pour rendre optimales les performances, d'implanter un répertoire au niveau de l'interface au bus à condition que ce répertoire soit une copie conforme de celui du second niveau d'antémémoire.

D'autres caractéristiques et avantages de l'invention apparaîtront ci-après à l'aide de la description faite en regard des dessins annexés qui représentent :

- la figure 1 un système multiprocesseur à bus unique à deux niveaux d'antémémoire selon l'invention ;

- la figure 2 une structure d'un processeur de la figure 1 ;

- la figure 3 un organigramme figurant un mode de fonctionnement associé à une lecture avec succès d'un bloc contenu dans le deuxième niveau d'antémémoire ;

- la figure 4 un organigramme figurant un mode de fonctionnement associé à un défaut de lecture d'un bloc contenu dans le deuxième niveau d'antémémoire ;

- la figure 5 un organigramme figurant un mode de fonctionnement associé à une écriture d'un bloc avec succès dans le deuxième niveau d'antémémoire ;

- la figure 6 un organigramme figurant un mode de fonctionnement associé à un défaut en écriture d'un bloc dans le deuxième niveau d'antémémoire.

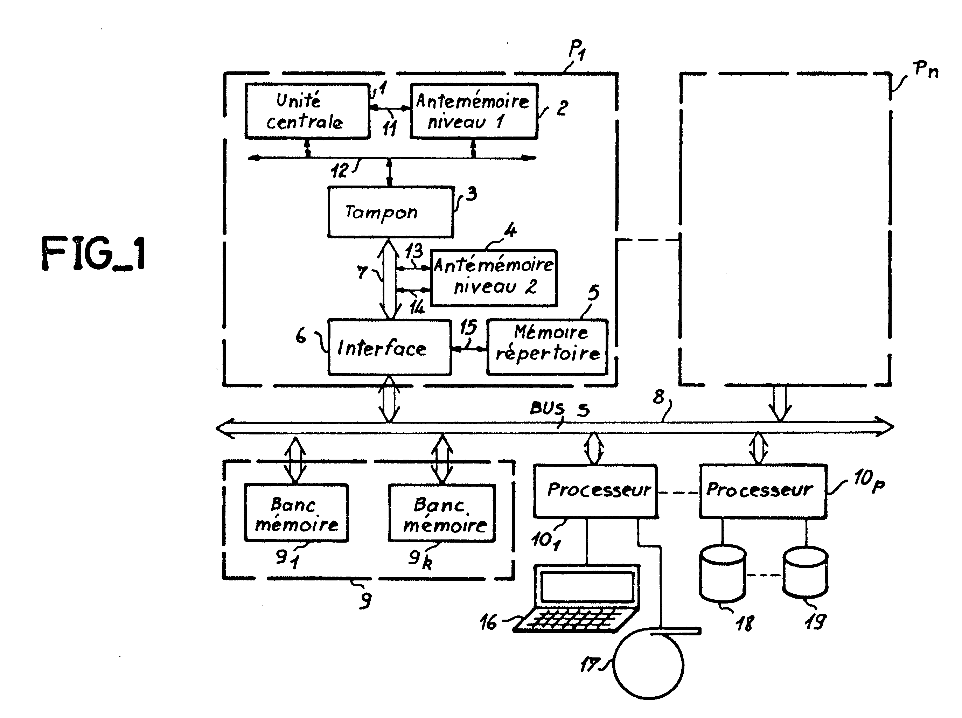

Un système multiprocesseur sur bus unique où chaque processeur est doté d'une antémémoire à deux niveaux selon l'invention est représenté à la figure 1.

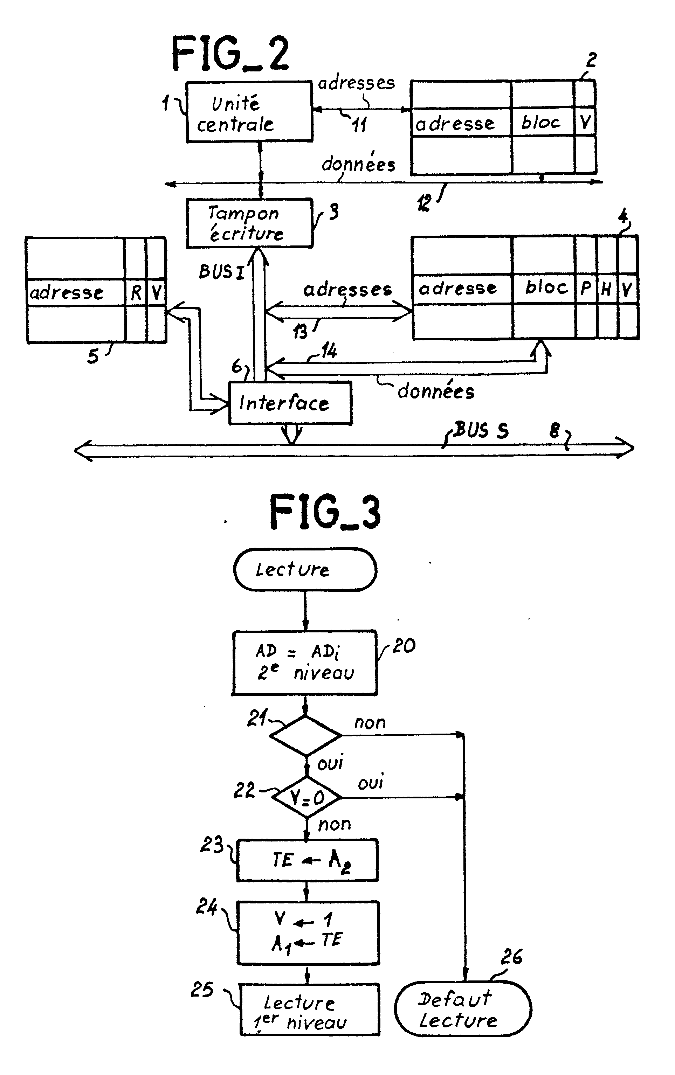

Il comprend une pluralité de processeurs référencés respectivement de $P_1$ à $P_n$ et dont deux seulement sont représentés à l'intérieur de lignes en pointillés. Chaque processeur comprend, de la manière également représentée à la figure 2, un premier niveau d'antémémoire 2, un tampon d'écriture 3, un deuxième niveau d'antémémoire 4, une mémoire répertoire 5 et un bloc d'interface 6. Le bloc d'interface 6 est relié au tampon d'écriture 3 par un bus interne 7. Les blocs d'interface 6 sont reliés à un bus système 8 noté BUS-S. Le système comprend également, d'une part, une mémoire principale 9, représentée à l'intérieur d'une ligne en pointillés, composée par k bancs mémoires, notés respectivement de $9_1$ à $9_k$, seuls les bancs $9_1$ et $9_k$ étant resprésentés, ainsi que, d'autre part, p processeurs d'entrées/sorties, notés respectivement de $10_1$ à $10_p$, seuls les processeurs $10_1$ à $10_p$ étant représentés. Chaque premier niveau d'antémémoire 2 est relié à l'unité centrale 1 et au tampon d'écriture 3 par un bus d'adresse 11 et par un bus de données 12. Chaque deuxième niveau d'antémémoire 4 est relié au bus interne 7 comportant notamment un bus d'adresse 13 et un bus de donnée 14. Chaque bloc d'interface 6 est relié à la mémoire répertoire 5 par un bus d'adresse et de donnée 15.

Dans l'exemple de la figure 1, les processeurs $10_1$ à $10_p$ sont connectés à des unités périphériques. A titre d'exemple, le processeur $10_1$ est couplé à un terminal clavier 16 et à un dérouleur de bande 17 et le processeur $10_p$ est couplé à des mémoires à disques 18 et 19. Si on se situe au niveau de l'architecture globale du système chaque processeur peut être considéré comme muni d'une antémémoire unique dont la réalisation pour des raisons d'efficacité (et éventuellement de faisabilité) implique deux niveaux. Par contre, en considérant l'architecture d'un processeur telle qu'elle est représentée à la figure 2, il est tout à fait équivalent de considérer qu'elle comprend deux antémémoires distinctes se situant à deux niveaux consécutifs de la hiérarchie mémoire. Aussi, sera t-il fait indifféremment allusion dans la suite de la description de premier niveau d'antémémoire ou d'antémémoire de premier niveau.

La mémoire centrale qui est commune à tous les processeurs a une organisation parallèle, constituée par les bancs $9_1$ à $9_k$ qui sont connectés au bus système 8. Pour exploiter tous les avantages de l'organisation parallèle, les mots d'un banc mémoire pourront ne pas correspondre à des adresses consécutives mais, à des adresses dont la configuration des bits de poids faibles est identique, pour former une organisation de type entrelacée.

Dans l'environnement multiprocesseur fortement couplé dans lequel se situe l'invention, les processus s'exécutent sur chaque processeur de manière asynchrone les uns vis-à-vis des autres, le flot de références mémoire en provenance de l'ensemble des processeurs se répartissant uniformément sur tous les bancs (dans une période d'observation suffisamment grande bien entendu). Si chaque banc mémoire est capable de mémoriser au niveau de son interface avec le bus système 8 une ou plusieurs requêtes de lecture ou d'écriture, plusieurs accès mémoire peuvent s'effectuer en parallèle. Cela permet d'augmenter le débit de la mémoire centrale (au premier ordre) directement en fonction du nombre de bancs mémoire. Pour ne pas limiter les performances globales du système par le débit de la mémoire centrale il suffit d'implanter dans le système un nombre de bancs $9_1$ à $9_k$ suffisant pour que le débit résultant soit supérieur à celui du bus système 8.

Afin de limiter les phénomènes d'accumulation des requêtes au niveau d'un banc mémoire, qui peuvent se produire pendant des périodes de temps limitées, il pourra être intéressant de surentrelacer la mémoire centrale en utilisant un nombre de bancs tel que le débit de la mémoire centrale soit très nettement supérieur à celui du bus système.

Une entrée d'informations depuis un périphérique dans le système mémoire se traduit par l'émission d'une ou plusieurs requêtes d'écriture en mémoire centrale 9 par le processeur d'entrées/sorties $10_i$ avec $1 \leq i \leq p$ auquel est attaché le périphérique. De même une sortie d'informations correspond à une ou plusieurs lectures d'informations en mémoire centrale 9 par un processeur d'entrées/sorties.

Le terme processeur d'entrées/sorties qui est utilisé ici ne correspond pas à une définition rigoureuse du type d'unité permettant de relier les périphériques au coeur du système multiprocesseur, mais il caractérise le fait que ces unités disposent d'une certaine "intelligence". Concrètement, cela signifie que les transferts d'informations entre les périphériques et la mémoire centrale 9 peuvent s'exécuter de manière autonome vis-à-vis de l'activité des processeurs qui eux sont chargés du traitement de l'information à proprement parler. De plus, les processeurs d'entrées/sorties sont capables d'enchaîner plusieurs transferts et de contrôler plusieurs périphériques simultanément contrairement à des unités d'entrées/sorties aux fonctionnalités plus réduites comme les unités dites à accès mémoire direct (DMA : Direct Memory Access).

Le bus système 8 est une voie de communication, c'est-à-dire un ensemble de lignes qui sont partagées par toutes les unités fonctionnelles du système.

Les caractéristiques logiques du bus doivent satisfaire à deux. exigences exposées dans les paragraphes suivants pour permettre de supporter un protocole de maintien de la cohérence des informations du système qui soit transparent vis-à-vis de logiciel.

Quand un processeur émet une requête sur le bus système, l'information qui est concernée peut être éventuellement partagée ; c'est-à-dire qu'il existe des copies multiples dans des antémémoires de processeurs distincts. La détection d'un partage effectif de l'information s'effectue par un accès de l'interface au bus système 6 de chaque processeur $P_1$ à $P_n$ à la mémoire répertoire 5 qui lui est associée. L'émission d'une requête de lecture ou d'écriture doit être acquittée par le destinataire explicite, qui dans le système est un des bancs mémoires $9_1$ à $9_k$ mais aussi par tous les processeurs $P_1$ à $P_n$. Le bus système 8 dispose de façon connue et non représentée de signaux spécifiques ou d'un encodage particulier des signaux d'acquittement pour indiquer qu'une requête a bien été prise en compte par la mémoire centrale 9 et tous les processeurs $P_1$ à $P_n$. Comme cela est expliqué dans la suite de la description, cet acquittement global permet de déterminer la valeur à attribuer aux différents indicateurs qui sont associés aux entrées des deux niveaux d'antémémoire 2 et 4 et de la mémoire répertoire 5 de chaque processeur $P_1$ ... $P_n$.

Lors du chargement d'un nouveau bloc dans l'antémémoire (2, 4) d'un processeur (quand on parle de l'antémémoire d'un processeur on se réfère à l'ensemble des deux niveaux), si la mémoire centrale 9 ne possède pas la copie à jour de l'information demandée elle ne doit pas traiter la ou les requêtes de lecture qui lui sont pourtant destinées. L'interface non représentée au bus système 8 des bancs mémoire 9 doit donc interpréter, pour chaque requête qui lui est destinée, la valeur de l'acquittement qui a été positionné par l'ensemble des processeurs $P_1$ à $P_n$. Une autre possibilité pourra consister à utiliser un signal spécifique qui sera activé par le processeur détenant la copie à jour de l'information pour avertir le banc mémoire $9_1$ à $9_k$ qu'il ne doit pas tenir compte d'une requête qui lui est destinée. Comme on l'a déjà vu c'est le processeur $P_1$ ... $P_n$ qui possède la copie à jour qui doit répondre et fournir l'information.

Si une requête d'écriture sur le bus système 8 concerne des informations partagées, deux alternatives sont possibles : soit effectuer l'écriture en mémoire centrale 9 et invalider les copies présentes dans les antémémoires 2, 4 et la mémoire répertoire 5, soit effectuer l'écriture directement dans les antémémoires 2, 4, contenant une copie de l'information.

Les propriétés précédentes que doit avoir le bus système sont nécessaires et suffisantes pour supporter les protocoles de maintien de la cohérence des informations du système. En utilisant certains protocoles sophistiqués on pourra pour des raisons de performances vouloir lire simultanément dans une antémémoire la copie à jour de vouloir l'information tout en la recopiant en mémoire centrale. Toutefois, cette transaction peut être remplacée par une requête de lecture suivie d'une requête d'écriture.

Il n'est pas utile pour la bonne compréhension du mode de réalisation préféré de l'invention de décrire en détail les spécifications d'un bus système. A partir du moment où les deux propriétés décrites précédemment sont satisfaites les autres caractéristiques mécaniques ou électriques généralement connues d'un bus système ne sont pas incompatibles avec l'architecture multiprocesseur représentée à la figure 1. Comme c'est la bande passante du bus qui va limiter les performances globales maximales du système et déterminer le nombre maximal de processeurs connectables, il est conseillé toutefois d'adopter des caractéristiques qui optimisent le débit au détriment éventuel du temps de réponse aux requêtes. Une méthode de transfert par commutation de paquets sera de ce point de vue nettement préférable. Il est aussi important que l'algorithme d'arbitrage utilisé ne privilégie aucune unité pour que la répartition de la bande passante soit équitable.

Il faut remarquer que les standards de bus actuels excepté celui connu sous la désignation "Futurebus" (norme IEEE, P896.1), ne permettent pas de supporter des architectures multiprocesseurs transparentes. Pour la réalisation de ces bus l'homme de l'art pourra à toutes fins utiles se reporter aux spécifications du standard "Futurebus" qui donne la description détaillée d'un bus système orienté vers les architectures multiprocesseurs.

Dans la description plus détaillée des fonctionnalités du processeur représenté à la figure 2 qui va suivre, on considèrera comme précédemment, que le premier niveau d'antémémoire 2 a les fonctionnalités d'une mémoire associative, bien que l'organisation d'une antémémoire ne correspond que très rarement à celle d'une véritable mémoire associative (on parle aussi de mémoire CAM : abréviation dans le language anglo-saxon de "content adressable memory"). Pour la réalisation de l'invention on pourra opter pour l'une des deux organisations les plus utilisées pour implanter une antémémoire, soit l'organisation à correspondance directe (Direct Mapping) soit l'organisation associative par segment (Set Associative), telles que décrites dans l'article "Cache Memories" d'Alan Jay Smith, déjà cité précédemment.

Pour toutes les opérations de lecture et d'écriture l'unité centrale 1 accède à l'antémémoire 2 du premier niveau. Sur une lecture de l'unité centrale 1 l'adresse présentée sur le bus 11 est comparée à la partie adresse des entrées de l'antémémoire 2 et en cas de succès les données demandées sont positionnées sur le bus 12. La taille des blocs de l'antémémoire du premier niveau est relativement faible pour que le temps de traitement d'un défaut soit le plus court possible. Pour pouvoir résoudre un défaut dans le premier niveau en un seul accès à l'antémémoire 4 du second niveau, il faut que la largeur du bus interne 12 soit identique à celle des blocs de l'antémémoire du premier niveau. Une largeur de 32 bits représente un bon compromis.

A chaque entrée de l'antémémoire 2 du premier niveau est associé un indicateur de validité V. Si cet indicateur est positionné à 1 le contenu de l'entrée est considéré comme pertinent. Par contre, si cet indicateur est positionné à 0 les informations contenues dans le bloc ne sont plus accessibles de manière associative. Même si l'adresse présentée sur le bus 11 est identique à celle qui est contenue dans la partie adresse d'une telle entrée un accès en lecture ou en écriture est traité comme un défaut.

Lors d'un accès en écriture de l'unité centrale 1 avec succès dans le premier niveau d'antémémoire, les deux bus 11 et 12 sont positionnés et la modification est effectuée. De plus, une requête d'écriture destinée au second niveau 4 d'antémémoire est mémorisée dans le tampon d'écriture 3. De cette manière, l'unité centrale 1 n'est pas bloquée pendant la durée nécessaire pour effectuer l'écriture dans le second niveau 4 d'antémémoire.

Le contenu du premier niveau 2 d'antémémoire étant inclus dans celui du second niveau 4 d'antémémoire, une écriture avec succès au premier niveau 2 implique obligatoirement une écriture avec succès dans le second niveau 4. La profondeur du tampon d'écriture 3, c'est-à-dire le nombre de requêtes d'écriture qu'il est capable de mémoriser, doit être suffisante pour que l'unité centrale ne soit pas bloquée trop fréquemment. Pour suivre les indications données dans un article d'Alan Jay Smith intitulé "Characterizing the Storage Process and its Effect on the Update of Main Memory by Write Through" paru dans la revue "Journal of the Association for Computing Machinery, Vol. 26, N° 1" on donnera à ce tampon d'écriture 3 une profondeur 4 pour permettre d'obtenir la quasi totalité du gain en performances apporté par un tampon de taille infinie, c'est d'ailleurs cette taille qui est aussi généralement choisie par les constructeurs informatiques.

Le tampon d'écriture 3 contrairement à ce que laisse penser cette appellation, ne sert pas uniquement à mémoriser les requêtes d'écriture destinées au second niveau d'antémémoire. Il joue aussi le rôle plus général d'interface au bus interne 7. Comme cela sera décrit par la suite, le tampon d'écriture 3 est aussi utilisé lors de la résolution des défauts dans le premier niveau d'antémémoire et pour effectuer les invalidations.

Lors d'un défaut sur une écriture de l'unité centrale 1 dans le premier niveau 2 d'antémémoire, une requête d'écriture est mémorisée dans le tampon d'écriture. Cependant, l'unité centrale n'est pas mise en attente du chargement du bloc manquant dans l'antémémoire du premier niveau. Le processus de mise à jour utilisé par l'antémémoire 2 du premier niveau s'effectue par écritures immédiates dans le niveau supérieur de la hiérachie mémoire sans qu'il n'y ait d'allocation d'une entrée lors d'un défaut sur écriture (write-through-without-allocation). Généralement, dans la plupart des systèmes informatiques dotés d'une antémémoire gérée en écritures immédiates il n'y a pas de chargement de l'information manquante lors d'un défaut sur écriture.

Les écritures qui sont émises sur le bus interne 7 à destination du second niveau d'antémémoire 4 correspondent donc à toutes les écritures effectuées par l'unité centrale. La façon dont elles sont traitées dans le second niveau d'antémémoire est décrit ci-après.

Lors d'un défaut sur une lecture de l'unité centrale 1 dans le premier niveau 2 d'antémémoire une requête de lecture est mémorisée dans le tampon d'écriture 3 et l'unité centrale est mise en attente jusqu'à ce que le défaut soit résolu, c'est-à-dire que le bloc manquant soit chargé. A ce moment, la lecture de l'unité centrale 1 est réexécutée. Le tampon d'écriture 3 sert d'interface au bus interne 7 à la fois pour les lectures et les écritures. Bien entendu, les requêtes de lecture ne sont pas tamponnées car l'unité centrale 1 est bloquée quand il lui manque une information.

Dans cette architecture c'est le tampon d'écriture 3 qui a la responsabilité du traitement d'un défaut dans le premier niveau 2 d'antémémoire. Il doit récupérer l'adresse du bloc manquant sur le bus d'adresses 11, demander le contrôle du bus interne 7 et émettre une requête de lecture vers le second niveau d'antémémoire 4. Quand les données demandées lui sont retournées par le deuxième niveau d'antémémoire (éventuellement après qu'un défaut ait aussi été résolu à ce niveau) le tampon d'écriture charge le nouveau couple "adresse/données" dans l'entrée de l'antémémoire 2 du premier niveau désigné par un algorithme de remplacement d'un type connu FIFO ou LRU, par exemple, qui sont les contractions des anglo-saxons "First In-First Out" et "Least Recently Used". Ce chargement provoque éventuellement l'écrasement d'informations valides qui sont cependant toujours présentes dans le second niveau d'antémémoire.

Les requêtes qui sont expédiées sur le bus interne 7 à destination du second niveau d'antémémoire sont donc :

-les lectures correspondant au traitement d'un défaut dans le premier niveau ;

-les écritures de l'unité centrale qui ont éventuellement été effectuées dans le premier niveau si l'information concernée était présente.

Un examen de la façon dont les requêtes sont traitées par le deuxième niveau 4 d'antémémoire ainsi que les fonctionnalités de l'interface au bus système qui intervient pour résoudre les défauts dans cette antémémoire et maintenir la cohérence des informations du système est le suivant.

Comme pour le premier niveau 2 d'antémémoire, le second niveau 4 d'antémémoire a les fonctionnalités d'une mémoire associative. Pour obtenir un bon taux de succès la taille de cette antémémoire est relativement importante (128 ou 256 K-octets pourra représenter un bon compromis) et de ce fait, l'organisation interne est du type associative par segment.

Afin que le traitement d'un défaut survenu dans le premier niveau 2 d'antémémoire n'implique pas plusieurs accès dans le deuxième niveau 4 d'antémémoire, la taille des blocs est au moins égale à celle des blocs du premier niveau. Une taille de bloc fixée à 256 bits parait un bon compromis et à ce titre les différentes études qui ont été réalisées sur les antémémoires ont montré qu'une taille de bloc importante (entre 128 et 512 bits) permet d'optimiser le taux de succès grâce à un effet de préchargement (cf. l'article "Cache Memories" d'Alan Jay Smith déjà cité précédemment).

Pour gérer la cohérence des informations trois indicateurs : P,M et V sont associés à chaque entrée. Ces indicateurs définissent cinq états pour un bloc d'antémémoire du second niveau 4 qui sont :

-"Invalide" (V = O, P et M non significatifs) : Les informations contenues dans l'entrée de l'antémémoire ne sont pas pertinentes. Un accès à cette entrée doit se traduire par un défaut.

-"Public/Non Modifié" (V = 1, P = O, M = O) : D'autres copies du bloc peuvent être présentes dans d'autres antémémoires. Il n'est pas nécessaire de recopier le bloc en mémoire centrale lors du rem placement cependant, l'information n'est pas nécessairement cohérente avec la mémoire centrale.

-"Public/Modifié" (V = 1, P = O, M = 1) : D'autres copies du bloc peuvent être présentes dans d'autres antémémoires. Il faut recopier le bloc en mémoire centrale lors d'un remplacement car celle-ci n'est pas à jour.

-"Privé/Non Modifié" (V = 1, P = 1, M = O) : Aucune autre antémémoire ne détient de copie de ce bloc. L'information est cohérente avec la mémoire centrale.

-"Privé/Modifié" (V = 1, P = 1, M = 1) : Aucune autre antémémoire ne détient de copie de ce bloc. Le bloc a été modifié depuis son chargement dans l'antémémoire du second niveau et il y a incohérence avec la mémoire centrale. Le bloc doit être recopié en mémoire centrale lors du remplacement.

L'indicateur V (Valide), précise (comme pour le premier niveau 2 d'antémémoire), si l'entrée contient de l'information pertinente. L'indicateur M (Modifié) précise si le bloc a été modifié depuis son chargement dans l'antémémoire 4 du second niveau. Lorsque ce bit est positionné, le bloc est recopié en mémoire lors du remplacement par un nouveau bloc. Le troisième et dernier indicateur, noté P (Privé), précise si le bloc est potentiellement partagé par d'autres processeurs. Dans le cas où ce bit est positionné à la valeur binaire 1, aucun autre processeur du système ne détient de copie.

La mise en oeuvre du protocole de maintien de la cohérence des informations du système est assurée par l'interface 6 au bus système 8 auquel est associé la mémoire répertoire 5 qui permet de détecter de manière dynamique et totalement transparente au logiciel, le partage des informations. Chaque entrée de la mémoire répertoire contient la partie adresse de l'entrée correspondante de l'antémémoire 4 du second niveau à laquelle est associé un indicateur d'état noté R (Répondeur) et un indicateur de validité V (Valide). Ces deux indicateurs constituent la partie "données" des entrées de cette mémoire associative.

La valeur de l'indicateur R représente le "ou" logique de la valeur des indicateurs P et M du bloc, de l'antémémoire du second niveau, correspondant.

Le procédé de gestion de la cohérence des informations qui est décrit ci-après est inspiré de l'ensemble des protocoles appelée "MOESI" qui est supporté par le standard de bus "Futurebus". Cet ensemble de protocoles est décrit dans l'article "A Class of Compatible Cache Consistency Protocols and their Support by the IEEE Futurebus" écrit par Paul Sweazey et Alan Jay Smith et publié dans les "Proceedings" du treizième "Annual Symposium on Computer Architecture" qui s'est tenu du 3 au 5 juin 1986 à Tokyo.

Les étapes 20 à 26 de l'organigramme de la figure 3 représentent un mode de fonctionnement du deuxième niveau d'antémémoire associé à une lecture avec succès.

Dans cet organigramme et les suivants le tampon d'écriture 3, le premier niveau 2 d'antémémoire et le deuxième niveau 4 d'antémémoire sont désignés respectivement par TE, A₁ et A₂.

Quand une lecture est émise sur le bus interne 7 par le tampon d'écriture 3 pour résoudre un défaut dans le premier niveau 2 d'antémémoire, l'adresse AD de l'information recherchée est placée sur le sous-bus d'adresse 13. Cette adresse AD est comparée à l'étape 20 avec la partie adresse AD$_i$ des entrées de l'antémémoire du second niveau 4 et en cas de succès, (étapes 21, 22) les données correspondant au bloc de l'antémémoire du premier niveau manquant sont placées sur le sous-bus de données 14 du bus interne pour être chargées dans le tampon d'écriture 3, à l'étape 23.

Les indicateurs P, M et V associés au bloc du second niveau d'antémémoire accédé ne sont pas modifiés.

Le tampon d'écriture 3 effectue le chargement du nouveau bloc dans l'antémémoire 2 du premier niveau et positionne le bit V à 1 à l'étape 24. L'activité de l'unité centrale 1 étant suspendue le tampon d'écritures 3 prend le contrôle du bus d'adresse 11 et du bus de données 12 pour effectuer le chargement à l'emplacement désigné par l'algorithme de remplacement, d'un type connu FIFO ou LRU, choisi. Quand le chargement est effectué il avertit l'unité centrale qu'elle peut réexécuter son cycle de lecture. Naturellement comme cela est figuré à l'étape 22, si le bit V du bloc accédé dans le premier niveau 2 d'antémémoire est à 1 les étapes 23 à 25 ne sont pas exécutées, le bloc est considéré comme absent et le défaut doit être résolu (étape 26).

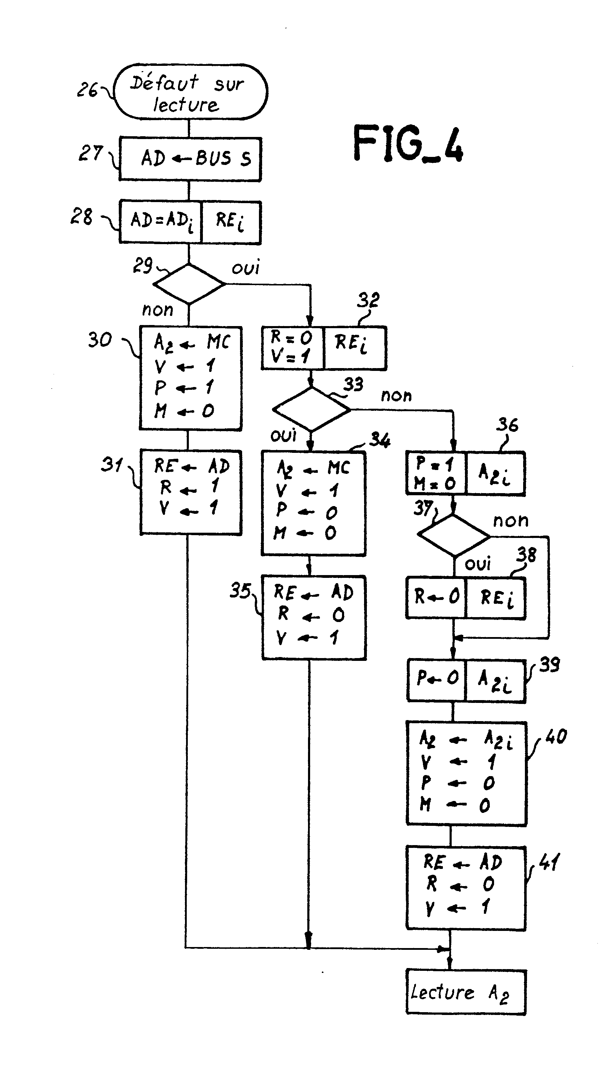

Les étapes 26 à 41 de l'organigramme de la figure 4 représentent un mode de fonctionnement associé à un défaut sur lecture dans le deuxième niveau 4 d'antémémoire. Dans cet organigramme et les suivants les lettres MC et RE désignent respectivement la mémoire centrale 9 et la mémoire répertoire 5.

Cet organigramme décrit précisément les différentes actions qui sont entreprises pour résoudre un défaut dans le second niveau d'antémémoire. Le rôle de l'interface au bus système 6 du processeur sur lequel s'est produit le défaut ainsi que celui des interfaces 6 au bus système 8 des autres processeurs P1 ...Pn sont détaillés.

Quand une lecture émise sur le bus interne 7 par le tampon d'écriture 3 se traduit par un défaut, c'est l'interface au bus système 6 qui est chargé de le résoudre. L'interface au bus système expédie alors des requêtes de lecture à destination de la mémoire centrale 9 et les étapes 27 et 28 sont exécutées par toutes les interfaces au bus système 8 des autres processeurs P1...Pn qui accèdent leur mémoire répertoire 5 avec l'adresse AD qui est positionnée sur le bus système 8 pour vérifier si une copie de l'information demandée n'est pas présente au sein du processeur.

Dans le processeur où le défaut s'est produit un calcul d'adresse est effectué pour désigner l'entrée de l'antémémoire du second niveau où doit être chargé le bloc manquant. Cette entrée est désignée par un algorithme de remplacement de type connu FIFO ou LRU. Pour optimiser le taux de succès, l'algorithme de remplacement devra désigner une entrée qui a une faible probabilité d'être à nouveau accédée dans un future proche.

Comme l'entrée qui est victime du remplacement peut contenir de l'information pertinente (V = 1) avec un indicateur M posi tionné à 1, la mémoire centrale 3 n'étant pas à jour il faut d'abord recopier ce bloc en mémoire centrale 9 avant de charger l'information qui fait défaut. Cependant, pour ne pas allonger le temps de traitement d'un défaut dans le second niveau 4 il faut tamponner le bloc à recopier et son adresse dans l'interface au bus système 6 (étapes non représentées). De cette manière un parallélisme entre le chargement du nouveau bloc et le déchargement du bloc remplacé, qui a été modifié lors de son séjour dans le second niveau d'antémémoire, est réalisé. Le déchargement des blocs qui ont été modifiés est la conséquence directe du processus de mise à jour par écritures différées.

Tout ou partie d'un bloc du second niveau d'antémémoire 4 peut être présent au premier niveau d'antémémoire 2. Lors du remplacement d'un bloc dans le second niveau 4 d'antémémoire il faut s'assurer qu'il ne va pas rester une copie de ces informations dans le premier niveau 2 d'antémémoire (étapes non représentées). Dans le système multiprocesseur décrit ici, il n'existe pas d'indicateurs spécifiques associés à chaque bloc du second niveau d'antémémoire 4 pour préciser si un copie de tout ou partie du bloc est présente dans le premier niveau 2 d'antémémoire.

Tous les blocs du premier niveau 2 correspondant au bloc du second niveau 4 qui est déchargé sont invalidés systématiquement. En supposant par exemple qu'un bloc du premier niveau 2 a une taille huit fois plus faible que celle des blocs du second niveau 4, huit accès au premier niveau 2 sont effectuées. C'est le tampon d'écriture 3 qui exécute ces accès dans le premier niveau 2. L'activité de l'unité centrale étant suspendue, le tampon d'écriture prend le contrôle du bus d'adresses 11 et du bus de données 12 pour effectuer l'invalidation. Un cycle d'invalidation consiste à positionner le bit V d'une entrée, qui est accédée associativement, à 0.

Si le bloc à invalider n'est pas présent dans l'antémémoire du premier niveau 2 les cycles d'invalidation effectués par le tampon d'écriture 3 se traduisent par des défauts qui bien entendu, ne provoquent aucune action complémentaire. Il est évident qu'un certain nombre d'accès d'invalidation vont être inutiles puisque l'information concernée a pu faire l'objet d'un remplacement.

Le surcoût en temps lié à des invalidations redondantes est cependant inférieur à celui qui est induit par la gestion d'indicateurs de "présence" dans le deuxième niveau d'antémémoire.

Si aucune autre antémémoire du second niveau 4 ne détient de copie du bloc demandé, celui ci est chargé depuis la mémoire centrale 9 dans l'état "Privé/Non Modifié" par exécution de l'étape 30. La mémoire répertoire 5 est chargée à l'étape 31 avec l'adresse du bloc et les deux indicateurs R et V sont positionnés à 1. En effet, comme on l'a vu précédemment la valeur de l'indicateur R est le "ou" logique des indicateurs P et M.

Quand des copies du bloc demandé existent dans l'état "Public/Non Modifié" les étapes 32 à 35 sont exécutées et la mémoire centrale répond aux requêtes de lecture émises sur le bus système. Le bloc est aussi chargé dans l'état "Public/Non Modifié".

Dans le cas où un processeur détient une copie du bloc demandé dans un état tel que le bit R soit positionné à 1 dans la mémoire répertoire 5 associée à son interface au bus système 8 il doit répondre aux requêtes de lecture émises sur le bus système. Dans ce cas, ce processeur est répondeur. Avant de fournir l'information au processeur demandeur il avertit la mémoire centrale qu'elle ne doit prendre en compte la ou les requêtes de lectures concernant ce bloc.

La copie du bloc demandé dans l'antémémoire du processeur répondeur peut avoir l'un des trois états suivants : "Public/Modifié", "Privé/Non Modifié" ou "Privé/Modifié". Dans les trois cas, le bit d'état P associé au bloc dans le second niveau d'antémémoire du processeur répondeur est positionné à 0 (étape 39). Aussi, si l'état était "Public/Modifié" ou "Privé/Modifié" il reste ou devient "Public/Modifié", l'indicateur R n'est alors pas altéré. Si la copie du bloc était dans l'état "Privé/Non Modifié" dans le processeur répondeur, son état devient "Public/Non Modifié" et l'indicateur R correspondant doit être remis à 0 (étape 38).

Dans le processeur répondeur, c'est l'interface 6 au bus système 8 qui accède au second niveau d'antémémoire 4 pour pouvoir fournir l'information demandée. Pour ce faire, l'interface au bus système acquiert le contrôle du bus interne 8. Un algorithme d'arbitrage permet de résoudre les conflits d'accès au bus interne qui peuvent se produire entre le tampon d'écriture et l'interface au bus système. L'interface au bus système doit avoir une priorité plus forte que le tampon d'écriture.

Dans le processeur demandeur le bloc est chargé dans l'état "Public/Non Modifié" quel que fut son état dans le processeur répondeur (étape 40). Le répertoire doit aussi être mis à jour par l'interface au bus système avec les indicateurs positionnés comme suit : $R = 0$ et $V = 1$ (étape 41).

Une fois que le bloc est chargé dans le second niveau d'antémémoire, le tampon d'écriture reçoit un signal de l'interface au bus système pour qu'il réexécute sa lecture telle que décrite à la figure 3.

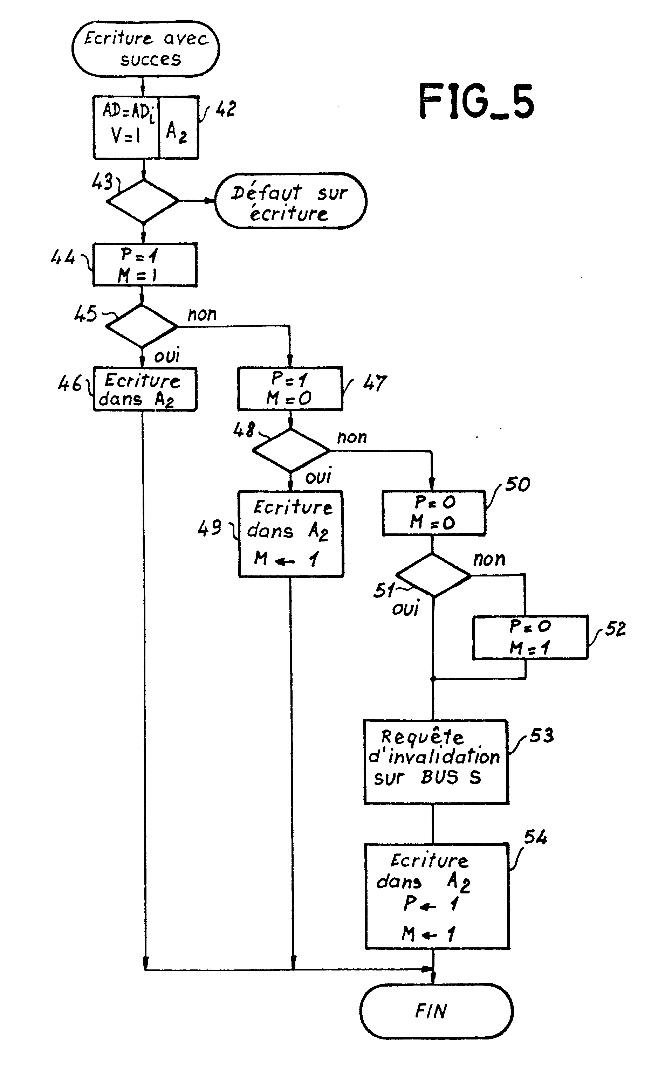

Les étapes 42 à 54 de l'organigramme de la figure 5 représentent un mode de fonctionnement associé à une écriture avec succès dans le deuxième niveau d'antémémoire 4.

Quand une écriture est émise sur le bus interne 7 par le tampon d'écriture 3 celle-ci s'exécute immédiatement si le bloc concerné est effectivement présent dans le deuxième niveau d'antémémoire 4 et si l'état de ce bloc est "Privé/Modifié" (étapes 42 à 46). Les indicateurs ne sont pas modifiés dans le second niveau d'antémémoire et dans le répertoire.

Dans le cas où le bloc est dans l'état "Privé/Non Modifié" la modification peut aussi s'exécuter immédiatement mais l'état du bloc doit devenir "Privé/Modifié" (étapes 47, 48 et 49). Concrètement cela signifie que l'indicateur M doit être positionné à 1. C'est le tampon d'écriture 3 qui a la responsabilité de mette à jour cet indicateur.

Quand le bloc est dans l'état "Public/Non Modifié" (étape 50) ou "Public/Modifié" (étape 52) l'écriture ne peut pas prendre place immédiatement. Le tampon d'écriture 3 demande à l'interface 6 au bus système 8 d'envoyer une requête d'invalidation à destination des autres processeurs (étapes 53). Toutes les interfaces au bus système 8 des processeurs $P_1..P_n$ vérifient en accédant à leur mémoire répertoire 5 si une copie du bloc concerné est présente au sein du processeur. Tous les processeurs qui possèdent une copie du bloc doivent l'invalider (étapes non représentées). Pour ce faire, l'interface au bus système 6 accède la mémoire répertoire 5 et l'antémémoire du second niveau 4 et positionne le bit V à 0. L'invalidation doit aussi être reflétée dans le premier niveau 2 d'antémémoire puisqu'un bloc qui est présent au second niveau 4 a pu être chargé dans ce premier niveau 2 pour y résoudre un défaut sur une lecture. Comme précédemment, certains accès d'invalidation au premier niveau 2 vont être inutiles puisque l'information concernée a pu être remplacée. Le tampon d'écritures 3 doit pouvoir accéder à l'antémémoire du premier niveau 2 alors que l'unité centrale n'est pas suspendue, pour positionner un indicateur V à 0. Le tampon d'écriture 3 interrompt dans ces conditions l'unité centrale 1 pour prendre le contrôle du bus d'adresses 11 et du bus de données 12.

Après que l'invalidation de toutes les copies présentes dans les autres processeurs ait été effectuée, le bloc est modifié et son état devient "Privé/Modifié" (étape 54)

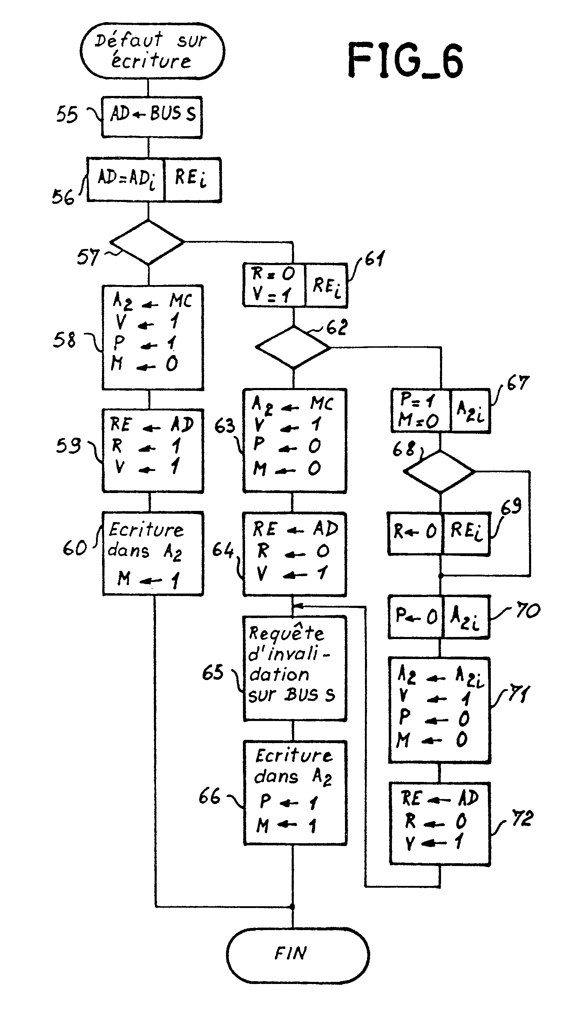

Les étapes 55 à 75 de l'organigramme de la figure 6 représentent un mode de fonctionnement associé à un défaut sur écriture dans le deuxième tampon d'antémémoire 4.

Comme pour un défaut sur une lecture émise par le tampon d'écriture, si l'antémémoire ne contient pas le bloc désiré des requêtes de lecture doivent être expédiées sur le bus système 8 (étape 55). Avant de charger le bloc manquant le système s'assure que l'information qui est contenue dans l'entrée du deuxième niveau d'antémémoire 4 qui est pointée par l'algorithme de remplacement n'a pas subi de modification. Si ce n'est pas le cas (l'indicateur M a la valeur 1), l'information est recopiée en mémoire centrale 9 avant d'effectuer le chargement effectif du nouveau bloc. Comme déjà évoqué pour la résolution d'un défaut sur lecture il est possible de tamponner la requête de déchargement dans l'interface 6 au bus système 8 pour ne pas allonger le temps de traitement d'un défaut. La recopie du bloc qui est victime du remplacement aura effectivement lieu quand l'interface au bus système aura réceptionné le bloc manquant. (Les étapes de déchargement correspondantes qui sont à la porté de l'homme de l'art ne sont pas décrites).

De même, le système s'assure qu'il ne reste pas une copie de tout ou partie du bloc qui est déchargé dans le premier niveau d'antémémoire 2. Le tampon d'écritures 3 interrompt alors l'activité de l'unité centrale 1 car celle-ci n'est pas suspendue lors d'un défaut sur écriture, pour effectuer les cycles d'invalidation dans le premier niveau d'antémémoire 2.

Si aucun autre processeur ne détient de copie du bloc demandé (étapes 56, 57) il est chargé depuis la mémoire centrale 9 dans l'état "Privé/Non Modifié" (étapes 58, 59). L'exécution de la modification par le tampon d'écriture dans le second niveau d'antémémoire a pour effet de faire passer le bloc dans l'état "Privé/Modifié" car l'indicateur M est positionné à 1 (étape 60).

Lorsque des copies du bloc manquant sont présentes dans l'antémémoire du second niveau 4 d'autres processeurs dans l'état "Public/Non Modifié", (étapes 61, 62) c'est aussi la mémoire centrale qui fournit l'information demandée. En effet, dans ce cas aucun processeur n'est répondeur. Comme pour un défaut sur lecture le bloc est chargé initialement dans l'état "Public/Non Modifié" (étapes 63, 64). L'exécution effective de l'écriture par le tampon d'écritures a pour effet de provoquer l'invalidation des autres copies présentes dans le système comme décrit précédemment en ce qui concerne les traitements associés à une écriture avec succès (étape 65). L'état du bloc devient donc "Privé/Modifié" (étapes 66).

Lorsqu'un processeur du système est répondeur il fournit l'information demandée. Le bloc va être chargé dans le processeur demandeur dans l'état "Public/Non Modifié" aux étapes 67 à 72. C'est l'exécution effective de l'écriture parle tampon d'écriture 3 qui provoque l'invalidation des copies présentes dans les autres processeurs (étape 65). Comme précédemment l'état du bloc une fois que l'écriture a été effectuée est "Privé/Modifié" (étape 66).

Comme on peut le constater les traitements liés à un défaut sur écriture correspondent à ceux qui sont attachés à un défaut sur lecture suivi de ceux qui sont associés à une écriture avec succès.

Il faut aussi régler les problèmes de cohérence créés par les processeurs d'entrées/sorties 10,..10$_P$ évoqués dans la présentation de l'art antérieur. Lors d'une opération d'entrée d'informations dans le système, des écritures sont effectuées en mémoire centrale par un des processeurs d'entrées/sorties. Comme le processeur d'entrées/sorties ne peut savoir si l'information traitée est partagée par un ou plusieurs processeurs il faut que chaque requête d'écriture envoyée sur le bus système soit accompagnée d'une requête d'invalidation. Pour éviter d'envoyer deux requêtes successives sur le bus système 8 il faut pouvoir encoder (éventuellement grâce à des fils de commande distincts) sur le bus système 8 le fait qu'une écriture en mémoire centrale doit être interprétée comme une invalidation par les processeurs P$_1$, ... P$_n$.

Lors d'une opération de sortie d'informations un processeur d'entrées/sorties émet des requêtes de lecture sur le bus système. Le protocole de maintien de la cohérence des informations décrit précédemment assure que c'est toujours l'information à jour qui est transmise vers la prériphérie. Dans le cas où la mémoire centrale n'est pas à jour c'est le processeur répondeur qui fournit l'information demandée.

La description précédente a été faite pour expliquer le fonctionnement du mode de réalisation préféré et n'a aucunement pour objet de limiter le domaine de l'invention. Le domaine de la présente invention ne saurait être limité que par les revendications exposées dans le paragraphe suivant. L'homme de l'art se rendra compte, après lecture de la description précédente, que bien des variations sont possibles sans sortir de l'esprit et du domaine de la présente invention.

## Revendications

1. Procédé de gestion d'antémémoires (2, 4) associées à des processeurs (P$_1$, P$_n$) dans une architecture multiprocesseur à bus unique (8) reliant chaque processeur à une mémoire centrale (9) commune, chaque processeur comprenant une unité centrale de traitement de l'information (1) et une antémémoire (2, 4), caractérisé en ce qu'il consiste à scinder l'antémémoire en deux niveaux (2, 4), à faire effectuer les écritures émises par l'unité centrale dans les deux niveaux d'antémémoire grâce à un processus d'écritures immédiates associé au premier niveau pour maintenir une copie à jour dans le second niveau des informations contenues dans le premier niveau et à effectuer la mise à jour des informations correspondantes dans la mémoire centrale (1) depuis le second niveau d'antémémoire (4) par un processus d'écritures différées.

2. Procédé selon la revendication 1 caractérisé en ce qu'il consiste à attribuer au deuxième niveau d'antémémoire (4) de chaque processeur 5 états :

-un premier état "Invalide" signifiant que les informations contenues à ce niveau ne sont pas valables ;

-un deuxième état "Public/Non Modifié" pour indiquer que d'autres copies des informations contenues à ce niveau peuvent être présentes dans d'autres antémémoires (2, 4), et qu'il n'est pas nécessaire de recopier l'information contenu à ce niveau en mémoire centrale (9) lors d'un remplacement.

-un troisième état "Public/Modifié" pour indiquer que d'autres copies des informations sont présentes dans d'autres antémémoires (2, 4), et qu'il faut recopier le bloc en mémoire centrale (9) lors d'un remplacement pour la mettre à jour.

-un quatrième état "Public/Non Modifié" pour indiquer qu'aucune autre antémémoire (2, 4) ne détient de copie et que l'information est cohérente avec celle contenue en mémoire cen trale (9).

-et un cinquième état "Privé/Modifié" pour indiquer qu'aucune autre mémoire ne détient de copie de l'information et que l'information a été modifiée depuis son chargement dans le deuxième niveau d'antémémoire (4) et qu'il y a incohérence avec la mémoire centrale (9), l'information dans ce cas étant recopiée en mémoire centrale lors du remplacement.

3. Procédé selon l'une quelconque des revendications 1 et 2, caractérisé en ce qu'il consiste pour résoudre un défaut de bloc manquant dans le premier niveau d'antémémoire à rechercher le bloc manquant dans le deuxième niveau d'antémémoire ; et mettre à jour quasi simultanément le premier niveau (2) et le second niveau (4) lors d'une écriture.

4. Procédé selon la revendication 3 caractérisé en ce qu'il consiste lorsque le bloc recherché n'est pas dans le deuxième niveau (4) à émettre des requêtes à destination de la mémoire centrale (19) et des autres processeurs (P, P$_n$) pour vérifier si le bloc demandé existe dans d'autres processeur.

5. Procédé selon la revendication 4, caractérisé en ce qu'il consiste à charger la copie du bloc demandé depuis la mémoire centrale (9) dans l'état "Privé/Modifié" si aucune autre antémémoire ne détient de copie du bloc demandé ou dans l'état "Public/Non Modifié" lorsque des copies existent dans d'autres antémémoires dans l'état "Public/Non Modifié".

6. Procédé selon la revendication 5, caractérisé en ce qu'il consiste à charger la copie du bloc demandée dans l'état "Public/Non Modifié" depuis l'antémémoire (4) d'un autre processeur qui détient une copie dans l'état "Privé/Non Modifié" ou "Privé/Modifié".

7. Procédé selon les revendications 1 et 2 caractérisé en ce qu'il consiste à effectuer immédiatement des opérations d'écriture dans le deuxième niveau d'antémémoire (4) si le bloc concerné est effectivement présent dans le deuxième niveau et si son état est l'état "Privé/Modifié" ou l'état "Privé/Non Modifié".

8. Procédé selon la revendication 7 caractérisé en ce qu'il consiste à transmettre à destination des autres processeurs des requêtes d'invalidation pour invalider les copies du bloc à modifier lorsque ce bloc est dans les états "Public/Non Modifié" ou "Public/Modifié" avant de procéder à sa modification et de le placer dans l'état "Privé/Modifié".

9. Procédé selon l'une quelconque des revendications 1 à 4, caractérisé en ce qu'il consiste à accéder au premier niveau d'antémémoire (2) pour invalider éventuellement tout au partie de la copie d'un bloc du second niveau d'antémémoire (4) qui subit une recopie en mémoire centrale (9) ou une invalidation en provenance d'un autre processeur (P, P$_n$).

10. Système de traitement de donnée fonctionnant suivant le procédé défini selon l'une quelconque des revendications 1 à 9, caractérisé en ce que chaque processeur comprend : une unité centrale couplée au premier niveau d'antémémoire (2) et à un tampon d'écriture (3) au moyen d'un bus (11, 12) ; et un bus interne (7) pour coupler le deuxième niveau d'antimémoire (4) au tampon d'écriture (3) et au bus (8) reliant l'ensemble des processeurs entre eux au travers d'un bloc d'interface (6).

**FIG_1**

$P_1$

$P_n$

Unité centrale

Antémémoire niveau 1 — 2

1

11

12

Tampon — 3

13

7

Antémémoire niveau 2 — 4

14

5

6

Interface

15

Mémoire répertoire

BUS S

8

Banc mémoire

Banc mémoire

$9_1$

$9_k$

9

Processeur

Processeur — $10_p$

$10_1$

16

17

18

19

0 278 196

## FIG_2

| adresse | bloc | V |
|---------|------|---|
| | | |

adresses

$\boxed{1}$ Unité centrale

*11*

*2*

données

*12*

Tampon écriture $\boxed{3}$

BUS I

| adresse | R | V |
|---------|---|---|
| | | |

*5*

adresses

*13*

| adresse | bloc | P | H | V |
|---------|------|---|---|---|
| | | | | |

*4*

*14*

données

$\boxed{6}$ Interface

BUS S *8*

## FIG_3

( Lecture )

$\boxed{AD = AD_i \\ 2^e \ niveau}$ *20*

*21* ◇ non

oui

*22* Y=0 ◇ oui

non

*23* TE ← $A_2$

*24* V ← 1
$A_1$ ← TE

*25* Lecture $1^{er}$ niveau

*26* ( Defaut Lecture )

FIG_4

26 — Défaut sur lecture

27 — AD ← BUS S

28 — | AD = AD$_i$ | RE$_i$ |

29 — ◇ — oui

non

30 — | A$_2$ ← MC
V ← 1
P ← 1
M ← 0 |

32 — | R = 0
V = 1 | RE$_i$ |

33 — ◇ — non

oui

34 — | A$_2$ ← MC
V ← 1
P ← 0
M ← 0 |

36 — | P = 1
M = 0 | A$_{2i}$ |

37 — ◇ — non

oui

31 — | RE ← AD
R ← 1
V ← 1 |

35 — | RE ← AD
R ← 0
V ← 1 |

38 — | R ← 0 | RE$_i$ |

39 — | P ← 0 | A$_{2i}$ |

40 — | A$_2$ ← A$_{2i}$
V ← 1
P ← 0
M ← 0 |

41 — | RE ← AD
R ← 0
V ← 1 |

Lecture A$_2$

0 278 196

# FIG_5

Ecriture avec succes

42
AD = AD$_i$
V = 1  | A$_2$

43
Défaut sur écriture

44
P = 1
M = 1

45
non
oui

46 Ecriture dans A$_2$

47
P = 1
M = 0

48
non
oui

49 Ecriture dans A$_2$
M ← 1

50
P = 0
M = 0

51
non
oui

52
P = 0
M = 1

53 Requête d'invalidation sur BUS S

54 Ecriture dans A$_2$
P ← 1
M ← 1

FIN

# FIG_6

Office européen des brevets

# RAPPORT DE RECHERCHE EUROPEENNE

Numero de la demande

EP  87 40 2955

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | IBM TECHNICAL DISCLOSURE BULLETIN, vol. 27, no. 1A, juin 1984, pages 334-337, New York, US; L. LIU: "Increasing hit ratios in second level caches and reducing the size of second level storage" <br> * Page 334, figure; page 336, dernier alinéa - page 337 * <br> --- | 1,3,4,9,10 | G 06 F   12/08 |
| X | IBM TECHNICAL DISCLOSURE BULLETIN, vol. 25, no. 10, mars 1983, pages 5133-5135, New York, US; R.P. FLETCHER et al.: "MP-shared cache with store-through local caches" <br> * En entier * <br> --- | 1,3,4,9,10 | |
| X | EP-A-0 185 867  (IBM) <br> * Figure 2; colonne 3, lignes 21-63; revendications 1,5,6,10 * <br> --- | 1,3 | |
| A | FR-A-2 151 425  (IBM) <br> * Figure 3; page 8, ligne 31 - page 12, ligne 11 * <br> --- | 1,2,5-8 | DOMAINES TECHNIQUES RECHERCHES (Int. Cl.4) <br><br> G 06 F   12/08 |
| A | IBM TECHNICAL DISCLOSURE BULLETIN, vol. 27, no. 1A, juin 1984, pages 298-300, New York, US; J.H. POMERENE et al.:"Second level cache for MP systems" <br> * En entier * <br> --- | 1-10 | |
| A | IBM TECHNICAL DISCLOSURE BULLETIN, vol. 23, no. 7A, décembre 1980, pages 2915-2917, New York, US; S.M. DESAI:"System cache for high performance processors" <br> * En entier * <br> ----- | 1-10 | |

Le présent rapport a été établi pour toutes les revendications

| Lieu de la recherche | Date d'achèvement de la recherche | Examinateur |
|---|---|---|
| LA HAYE | 23-03-1988 | LEDRUT P. |

EPO FORM 1503 03.82 (P0402)